Europäisches Patentamt

European Patent Office

Office européen des brevets

(11) Veröffentlichungsnummer: **0 363 797**

**A2**

(12) **EUROPÄISCHE PATENTANMELDUNG**

(21) Anmeldenummer: 89118383.2

(22) Anmeldetag: 04.10.89

(51) Int. Cl.5: **C08L 69/00** , //(C08L69/00, 51:04,25:12,33:12)

(30) Priorität: 11.10.88 DE 3834549

(43) Veröffentlichungstag der Anmeldung:
18.04.90 Patentblatt 90/16

(84) Benannte Vertragsstaaten:
**BE DE FR GB IT NL**

(71) Anmelder: **BASF Aktiengesellschaft
Carl-Bosch-Strasse 38
D-6700 Ludwigshafen(DE)**

(72) Erfinder: **Neumann, Rainer, Dr.
Mozartstrasse 2 b
D-6704 Mutterstadt(DE)**
Erfinder: **Vietmeier, Juergen, Dr.
Waldstrasse 112
D-6706 Wachenheim(DE)**
Erfinder: **Baumgartner, Ehrenfried, Dr.
Goethestrasse 1
D-6701 Roedersheim-Gronau(DE)**

(54) **Thermoplastische Formmasse auf der Grundlage von Polycarbonat, Pfropfkautschuken und N-substituierten Methacrylamidcopolymeren.**

(57) Thermoplastische Formmasse aus 10 bis 80 Gew.% mindestens eines Polycarbonats A, 10 bis 50 Gew.% mindestens eines Pfropfmischpolymerisats B aus, jeweils bezogen auf B, 20 bis 80 Gew.% mindestens eines Kautschuks mit einer Glastemperatur $<0°C$ und 80 bis 20 Gew.% einer darauf gepfropften Hülle aus, jeweils bezogen auf $b_2$, 60 bis 90 Gew.% mindestens eines vinylaromatischen Monomeren mit bis zu 12 C-Atomen oder Methylmethacrylat und 40 bis 10 Gew.% (Meth)acrylnitril oder (Meth)acrylsäureestern mit $C_1$-$C_8$-Alkylresten, 5 bis 40 Gew.% eines thermoplastischen Harzes C aus, jeweils bezogen auf C, 50 bis 90 Gew.% Styrol, $\alpha$-Methylstyrol und/oder einem kernsubstituierten Styrol und 10 bis 50 Gew.% (Meth)acrylnitril sowie 5 bis 50 Gew.% eines Polymerisats D, hergestellt durch Polymerisation einer Mischung aus, jeweils bezogen auf die Summe der Komponenten $d_1$ und $d_2$, 70 bis 95 Gew.% Methylmethacrylat $d_1$ und 5 bis 30 Gew.% eines Monomeren $d_2$ der allgemeinen Formel I

$$CH_2 = \overset{\overset{\displaystyle R}{|}}{C}\text{-CO-NH-X} \qquad (I)$$

wobei R Wasserstoff oder Methyl und X ein Cyclohexyl-, Methylcyclohexyl-, Phenyl- oder Benzylrest ist, gegebenenfalls in Gegenwart von, bezogen auf die Summe der Komponenten $d_1$, $d_2$ und $d_3$, bis zu 70 Gew.% eines Kautschuks $d_3$ mit einer Glastemperatur von unter $0°C$.

EP 0 363 797 A2

## Thermoplastische Formmasse auf der Grundlage von Polycarbonat, Pfropfkautschuken und N-substituierten Methacrylamidcopolymeren

Thermoplastische Mischungen aus Polycarbonat, kautschukelastischen Polymeren und ggf. weiteren Polymeren aus der Gruppe der Vinylpolymeren sind z.B. aus

DE-PS 11 70 141 (1)
DE-PS 18 10 993 (2)
DE-PS 22 59 564 (3)
DE-OS 20 37 419 (4)
EP 244 856 (5)
DE-PS 33 44 102 (6)
DE-PS 23 29 646 (7)
EP 96 301 (8)
DE-PS 26 53 143 (9)
DE-PS 26 53 146 (10)
US-PS 3 923 922 (11)
US-PS 3 652 715 (12)
DE-PS 23 43 609 (13)
DE-PS 33 00 857 (14)
EP 230 030 (15)
EP 28 753 (16)
US-PS 4 638 033 (17)
DE-OS 36 32 946 (18)

bekannt. So sind insbesondere Mischungen aus Polycarbonat und ABS- oder ASA-Kautschuken bekannt und in (1) bis (5) beschrieben. Diese Formmassen besitzen im allgemeinen zufriedenstellende Eigenschaften wie hohe Wärmeformbeständigkeit und Zähigkeit. Ein Nachteil ist allerdings ihre geringe Spannungsrißbeständigkeit und ungenügende Beständigkeit gegenüber heißem Wasser, was ihre Anwendung in Bereichen stark einschränkt, wo ständiger Kontakt mit heißem Wasser zu erwarten ist, z.B. in Waschmaschinen, Heißwasserkochern oder Geschirr. Außerdem ist die hohe Spannungsrißanfälligkeit dieser Formmassen nach Einwirkung von Kohlenwasserstoffen für viele Anwendungen im Automobilbereich nachteilig.

In (6), (7) und (8) wird vorgeschlagen, die Spannungsrißneigung solcher Formmassen durch Verwendung von Polycarbonaten oder Copolycarbonaten mit Tetraalkylbisphenol A-Einheiten zu verbessern. Allerdings erfordern diese Formmassen aufgrund der Schwerverarbeitbarkeit dieser speziellen Polycarbonate sehr hohe Verarbeitungstemperaturen, wobei oftmals eine Kautschukschädigung verbunden mit einer Gelbverfärbung der Formmassen auftritt. Solche Formmassen haben sich deshalb nicht bewährt.

In (9) und (10) wird vorgeschlagen, die Heißwasserstabilität von Polycarbonat-Kautschuk-Mischungen durch Zugabe von Styrol-Acrylnitril-Maleinsäureanhydrid-Polymeren zu erhöhen. Allerdings sind solche Terpolymere wegen der bekannten Tendenz von Styrol und Maleinsäureanhydrid zur Bildung alternierender Copolymerer schwer homogen darstellbar; außerdem neigen sie zur Vergilbung. Weiterhin sind die in (10) verwendeten EPDM-Kautschuke im Vergleich zu ABS- oder ASA-Kautschuken wesentlich teurer. Die in (11) und (12) beschriebenen Mischungen mit guter Lösungsmittelstabilität stellen vernetzte Blends dar und sind deshalb schwer zu verarbeiten, bzw. für den Spritzguß ungeeignet.

In (13) werden Polycarbonat/ABS-Mischungen offenbart, die zusätzlich einen Polyester enthalten, wobei der Polyesteranteil 25 bis 85 Gew.-Teile der Formmassen ausmacht. Solche Mischungen stellen eher Polyester-ABS-Mischungen mit einem Nebenanteil Polycarbonat dar und sind mit den hier beschriebenen polyesterfreien Mischungen nicht vergleichbar. In (14) bis (17) wird vorgeschlagen, die Spannungsrißbeständigkeit von kautschukhaltigen Polycarbonatmischungen durch Zugabe von Polyolefinen zu erhöhen. Die dafür notwendigen relativ hohen Mengen an Polyolefinen wirken sich aber negativ auf die Wärmeformbeständigkeit unter Absenkung des Vicatwertes auf. Die in (18) beschriebenen Mischungen aus Polycarbonaten und Copolymeren aus MMA und N-substituierten Methacrylamiden enthalten keine Kautschukkomponente und weisen daher ein gegenüber den erfindungsgemäßen Polycarbonaten deutlich niedrigeres Zähigkeitsniveau auf. Außerdem ist ihre Spannungsrißbeständigkeit ungenügend.

Es bestand daher die Aufgabe, die Spannungsrißbeständigkeit und die Heißwasserstabilität von ABS/PC bzw. ASA/PC-Mischungen zu erhöhen, ohne daß die Wärmeformbeständigkeit erniedrigt wird.

Diese Aufgabe wurde erfindungsgemäß durch Zugabe der Komponente D, einen Copolymeren aus MMA und einem N-substituierten (Meth)acrylamid gelöst.

Unmittelbarer Erfindungsgegenstand ist eine thermoplastische Formmasse, enthaltend, bezogen auf die

2

Summe der Komponenten A und B und C und D,

A: 10 bis 80 Gew.% mindestens eines Polycarbonats A

B: 10 bis 50 Gew.% mindestens eines Pfropfmischpolymerisats B aus, jeweils bezogen auf B,

$b_1$ 20 bis 80 Gew.% mindestens eines Kautschuks $b_1$ mit einer Glastemperatur von unter 0 °C und

$b_2$ 80 bis 20 Gew.% einer darauf gepfropften Hülle $b_2$ aus, jeweils bezogen auf $b_2$,

$b_{21}$ 60 bis 90 Gew.% mindestens eines vinylaromatischen Monomeren mit bis zu 12 C-Atomen oder Methylmethacrylat ($b_{21}$) und

$b_{22}$ 40 bis 10 Gew.% eines (Meth)acrylsäureesters oder (Meth)acrylnitril mit $C_1$-$C_8$-Alkylresten ($b_{22}$)

C: 5 bis 40 Gew.% eines thermoplastischen Harzes C aus, jeweils bezogen auf C,

$c_1$ 50 bis 90 Gew.% Styrol, $\alpha$-Methylstyrol und/oder eines kernsubstituierten Styrols ($c_1$) und

$c_2$ 10 bis 50 Gew.% (Meth)acrylnitril ($c_2$)

D: 5 bis 50 Gew.% eines Polymerisats D, hergestellt durch Polymerisation einer Mischung' aus, jeweils bezogen auf die Summe der Komponenten $d_1$ und $d_2$,

$d_1$) 70 bis 95 Gew.% Methylmethacrylat ($d_1$) und

$d_2$) 5 bis 30 Gew.% eines Monomeren ($d_2$) der allgemeinen Formel I

$$CH_2 = \underset{\underset{R}{|}}{C} \text{-CO-NH-X} \qquad (I)$$

wobei R Wasserstoff oder Methyl ist und X ein Cyclohexyl-, Methylcyclohexyl-, Phenyl- oder Benzylrest ist, gegebenenfalls in Gegenwart von, bezogen auf die Summe der Komponenten $d_1$ und $d_2$ und $d_3$,

$d_3$ 0 bis zu 70 Gew.% eines Kautschuks ($d_3$) mit einer Glastemperatur von unter als 0 °C.

Eine bevorzugte Formmasse enthält

30 bis 80 Gew.% Polycarbonat A

10 bis 40 Gew.% Pfropfmischpolymerisat B aus

30 bis 70 Gew.% eines Kautschuks mit einer Glastemperatur von weniger als -20 °C, 70 bis 30 Gew.% einer darauf gepfropften Hülle aus, jeweils 60 bis 90 Gew.% eines vinylaromatischen Monomeren mit bis zu 12 C-Atomen oder Methylmethacrylat und 40 bis 10 Gew.% (Meth)acrylnitril oder (Meth)acrylsäureestern mit $C_1$-$C_8$-Alkylresten und

5 bis 30 Gew.% eines thermoplastischen Harzes C aus

60 bis 90 Gew.% Styrol, $\alpha$-Methylstyrol und/oder einem kernsubstituierten Styrol und 10 bis 40 Gew.% (Meth)acrylnitril sowie

5 bis 40 Gew.% eines Polymerisats D aus 70 bis 95 Gew.% Methylmethacrylat und 5 bis 30 Gew.% eines Monomeren der allgemeinen Formel I, gegebenenfalls hergestellt in Gegenwart von bis zu 70 Gew.% eines Kautschuks mit einer Glastemperatur kleiner -20 °C.

Komponente A

Als Polycarbonat (Komponente A) können die bekannten Polycarbonate verwendet werden. Unter Polycarbonat A im Sinne der erfindungsgemäßen Formmasse sollte Polycarbonat auf Basis von Homopolycarbonaten und Copolycarbonaten von Bisphenolen verstanden werden. Als Bisphenole kommen dabei beispielsweise in Frage: Dihydroxydiphenyle, Bis-(hydroxyphenyl)-alkane, Bis-(hydroxyphenyl)ether. Es können aber auch alle anderen, für die Herstellung Polycarbonaten geeigneten Bisphenole eingesetzt werden, wie sie u.a. in der Monographie H. Schnell, Chemistry and Physics of Polycarbonates, Interscience Publishers, New York, 1964, in der US-PS 2 999 835 und in der DE-OS 2 248 817 beschrieben sind. Besonders bevorzugt sind Polycarbonate auf Basis von Bisphenol A, nämlich 2,2-Bis(4-hydroxyphenyl)-propan. Die Synthese der Polycarbonate wird beispielsweise in der US-PS 2 999 835 und der GB-PS 772 627 beschrieben.

Die Komponente A weist im allgemeinen ein mittleres Molekulargewicht $\overline{M}_w$ im Bereich von 25.000 bis 200.000, bestimmt durch Lichtstreuung, auf.

Die Formmasse besteht zu 10 bis 80 Gew.%, bevorzugt zu 30 bis 80 Gew.%, aus der Komponente A.

Komponente B

Die Komponente B ist ein Pfropfmischpolymerisat und ist in den Formmassen zu 10 bis 50 Gew.%, bevorzugt zu 10 bis 40 Gew.% enthalten. Diese Pfropfmischpolymerisate B sind aufgebaut aus einer Pfropfhülle $b_2$, die 80 bis 20 Gew.%, bevorzugt 70 bis 30 Gew.%, jeweils bezogen auf B ausmacht. Die

Pfropfhülle $b_2$ besteht zu, jeweils bezogen auf $b_2$, 60 bis 90 Gew.% aus einem vinylaromatischen Monomeren mit bis zu 12 C-Atomen oder Methylmethacrylat. Als vinylaromatische Monomere seien Styrol, α-Methylstyrol oder kernalkylierte Styrole genannt. Bevorzugt ist Styrol. 40 bis 10 Gew.%, bezogen auf $b_2$, der Hülle werden aus (Meth)acrylnitril- oder (Meth)acrylsäureestereinheiten mit bis zu 12 C-Atomen gebildet. Bevorzugte Monomere sind Methylmethacrylat und Acrylnitril.

Die genannten Monomeren der Pfropfhülle werden auf eine Pfropfgrundlage $b_1$, die 20 bis 70 Gew.%, bevorzugt 30 bis 70 Gew.%, bezogen auf B ausmacht gepfropft. Die Pfropfgrundlage besteht aus einem Kautschuk mit einer Glastemperatur von unter $0°C$, bevorzugt unter $-20°C$.

Die Herstellung der Pfropfmischpolymerisats ist an sich bekannt. Sie können z.B. hergestellt werden durch Polymerisation der Pfropfmonomeren in Gegenwart eines Kautschuks.

Der Kautschuk $b_1$ soll eine Glastemperatur (nach K.H. Illers und H. Breuer, Kolloid-Zeitschrift 167 (1961), Seite 110) haben, die unter $0°C$, vorzugsweise unter $-20°C$ liegt. Als Kautschuk kommt z.B. in Betracht: Polybutadien (vgl. DE-OS 14 20 775 und DE-OS 14 95 089) Copolymerisate aus Butadien und Styrol (vgl. GB-PS 649 166), Polyacrylsäureester (vgl. DE-AS 12 60 135), sowie Copolymerisate aus Acrylsäureester und Butadien (vgl. DE-AS 12 38 207), ferner Elastomere von Copolymerisaten aus Acrylsäureestern mit Styrol, Acrylnitril und Vinylethern und Copolymerisate aus Ethylen, Propylen und einem nicht konujugierten Dien (EPDM-Kautschuke).

Bevorzugte Pfropfmischpolymerisate sind ABS- oder ASA-Polymere aus einem Butadien- oder Acrylatkautschuk als Pfropfgrundlage und einem SAN-Copolymerisat als Pfropfhülle.

Diese schlagzähmodifizierten SAN-Copolymerisate sind an sich bekannt z.B. aus Ullmanns "Encyklopädie der Technischen Chemie", 4. Auflage, Band 19, 1980, Seite 277 bis 295.

Sowohl die Kautschuke als auch die Pfropfmischpolymerisate werden in bekannter Weise in Emulsion oder Lösung hergestellt, wobei die Pfropfung auch in üblicher Weise in mehreren Stufen erfolgen kann. Bevorzugt ist die Emulsionspolymerisation. Es entstehen Pfropfmischpolymerisate, bei denen die Pfropfhülle in dem Fachmann bekannten Grenzen auf die elastomere Grundlage gepfropft ist.

Der Teil der Monomeren, der nicht auf den Kautschuk gepfropft ist, copolymerisiert für sich. Dieses Copolymerisat kann bei den hier in Rede stehenden Gemischen der Komponente C zugerechnet werden. Man kann den Anteil der gepfropften Monomeren dadurch ermitteln, daß man den Gelgehalt der Pfropfcopolymeren bestimmt: Das Pfropfcopolymerisat wird in einem Lösungsmittel, z.B. in Methylethylketon gelöst; dabei lösen sich nur die nicht gepfropften, für sich allein copolymerisierbaren Monomeren.

Die Teilchengrößen der Pfropfmischpolymerisate können den Erfordernissen entsprechend nach bekannten Methoden bestimmt und eingestellt werden, z.B. bei der Emulsionspolymerisation mit Hilfe eines Saatlatex oder durch einen anschließenden Agglomerationsschritt. Üblicherweise sollte die mittlere Teilchengröße ($d_{50}$-Wert der integrallen Massenverteilung, bestimmt nach der in DE 24 27 960 beschriebenen Methode; zwischen 0,1 und 1 μm bei Pfropfmischpolymerisaten, die in bekannter Weise in Emulsion hergestellt wurden, liegen oder zwischen 0,5 und 10 μm bei Produkten, die in bekannter Weise in Lösung hergestellt wurden.

Komponente C

Die Formmasse besteht zu 5 bis 40 Gew.%, bevorzugt zu 5 bis 30 Gew.% aus der Komponente C. Als Komponente C der erfindungsgemäßen Formmassen werden Copolymere aus Styrol, α-Methylstyrol und/oder eines kernalkylierten Styrols mit (Meth)acrylnitril verstanden. Bevorzugt sind Styrol-Acrylnitrilpolymere, oder wenn eine hohe Wärmeformbeständigkeit erreicht werden soll α-Methyl-Styrol-Acrylnitrilcopolymerisate. (Meth)acrylnitril ist in diesen Copolymeren zu 10 bis 50 Gew.%, bevorzugt zu 10 bis 40 Gew.% vertreten. Entsprechend liegt der Anteil an Styrol, α-Methyl-Styrol bzw. kernalkylierten Styrolen bei 90 bis 50 Gew.%, bevorzugt bei 90 bis 60 Gew.%.

Die besonders bevorzugten Styrol-Acrylnitril-Copolymerisate sind im Handel erhältlich und können z.B. nach der Lehre der DE-AS 10 01 001 bzw. DE-PS 10 03 436 hergestellt werden. Der Molekulargewichtsbereich der Copolymerisate kann z.B. 80.000 bis 500.000 (Gewichtsmittel $\overline{M}_w$ aus Lichtstreuung) betragen.

Komponente D

Die Formmasse besteht zu 5 bis 50 Gew.%, bevorzugt zu 5 bis 40 Gew.% aus der Komponente C. Die Komponente C der erfindungsgemäßen Formmassen ist ein thermoplastisches Harz, und stellt ein Copolymeres aus einpolymeri sierten Einheiten aus Methylmethacrylat und mindestens einem Monomeren der allgemeinen Formel I dar.

Methylmethacrylat ist zu 70 bis 95 Gew.% im Copolymeren vertreten, entsprechend ist der Anteil als Monomeren der Formel I 30 bis 5 Gew.%.

Die Herstellung der Copolymerisate wird nach bekannten Verfahren zur Polymerisation von Vinylverbindungen, insbesondere der radikalischen Polymerisation durchgeführt. Die Polymerisation kann beispielsweise in Substanz oder Lösung, in Emulsion oder als Perlpolymerisation durchgeführt werden. Als radikalische Polymerisationsinitiatoren können Azoverbindungen wie AIBN, oder Peroxide wie Di-Benzoylperoxid und Redoxsysteme gelten. Als Beispiel für Radikalinitiatoren für die Emulsionspolymerisation sei Kaliumperoxodisulfat genannt. Als Regler können bei der Polymerisation Mercaptane verwendet werden. Der Molekulargewichtsbereich der Copolymerisate kann z.B. 40.000 bis 400.000 (Gewichtsmittel $\overline{M}$ w aus Lichtstreuung) betragen.

Wird eine hohe Zähigkeit der erfindungsgemäßen Formmassen gefordert, so ist es nützlich die Monomeren $d_1$ und $d_2$ in Gegenwart von bis zu 70 Gew.% eines Kautschuks $d_3$, bezogen auf die Summe der Komponenten $d_1$ bis $d_3$ zu polymerisieren. Man erhält dadurch ebenfalls Pfropfmischpolymerisate, bei denen wie bei B die Monomeren $d_1$ und $d_2$ ganz oder teilweise auf den Kautschuk gepfropft sind. Für die Ausführungsform und die bevorzugten Kautschuke bzw. Teilchengrößen der Kautschuke gilt das bei der Beschreibung von B gesagte.


Komponente E

Die thermoplastische Formmasse kann auf 100 Gew.-Teile der Summe aus A, B, C und D zusätzlich bis etwa 40 Gew.-Teile an üblichen Zusatzstoffen enthalten, ohne daß sich ihre Eigenschaften wesentlich oder gar ungünstig verändern.

Übliche Zusatzstoffe sind z.B. Verstärkungsmittel und Füllstoffe wie Glasfasern, Asbestfasern, Kohlenstoff-Fasern und/oder Gipsfasern, synthetische Calciumsilikate, Kaolin, calcinierter Kaolin, Wollastonit, Talkum, Kreide und deren Kombination. Außerdem können Zusatzstoffe zur Erhöhung der Abschirmung von elektromagentischen Wellen (z.B. Metallpulver, -flocken, -fasern, metallbeschichtete Füllstoffe), Pigmente und Farbstoffe sowie Antistatika, Antioxidantien und Stabilisatoren Verwendung finden. Weitere Zusatzstoffe sind Flammschutzmittel z.B. halogenhaltige Flammschutzmittel gegebenenfalls in Kombination mit anorganischen Synergisten wie Antimon- oder Borverbindungen, oder halogenfreie Verbindungen sowie anorganische Substanzen, die bei erhöhter Temperatur nichtbrennbare Gase abspalten (z.B. Carbonate).

Außerdem können Schmiermittel, die für die Weiterverarbeitung der Formmassen, z.B. bei der Herstellung von Formkörpern und Formteilen erforderlich sind und Oxidationsverzögerer, sterisch gehinderte Phenole, Hydrochinone, substituierte Vertreter dieser Gruppe und deren Mischungen verwendet werden.

Beispiele für UV-Stabilisatoren sind verschiedene substituierte Resorcine, Salicylate, Benzotriazole und Benzophenone und sterisch gehinderte Amine (HALS), die im allgemeinen in Mengen bis zu 2 Gew.% eingesetzt werden.

Gleit- und Entformungsmittel, die in der Regel bis zu 1 Gew.% dem thermoplastischen Harz zugesetzt werden sind Fettsäuren (z.B. Palmitin- oder Stearinsäure), Fettalkohole, Fettsäurealkylester und -amide sowie Ester des Pentaerythrits mit langkettigen Carbonsäuren und Ethylenoxid-Propylenoxid-Blockcopolymere wie z.B. Pluriol®-Marken..


Herstellung der Formmassen

Das Mischen der Komponenten A, B, C, D und eventuell E kann nach allen bekannten Methoden erfolgen. Vorzugsweise geschieht jedoch das Mischen der Komponenten durch gemeinsames Extrudieren, Kneten oder Verwalzen, wobei die Komponenten wenn nötig aus der bei der Polymerisation erhaltenen Lösung oder aus der wäßrigen Dispersion zu isolieren sind. Die in wäßriger Dispersion erhaltenen Produkte der Pfropfmischpolymerisation können aber auch teilweise entwässert oder direkt als Dispersion mit der Komponente C und dann mit dem Polycarbonat A vermischt werden, wobei dann während der Vermischung die vollständige Trocknung des Pfropfmischpolymerisats erfolgt.

Die Herstellung der Formmasse erfolgt z.B. dadurch, daß eine Schmelze der harten Polymerisate A und C mit den Pfropfmischpolymerisaten bei Temperaturen über 200° C intensiv vermischt wird. Sie erfolgt, um eine besonders homogene Verteilung der Weichphase in der Hartmatrix zu erzielen, bevorzugt dadurch, daß nun in der Schmelze der Polycarbonate (Komponente A), z.B. in einem Extruder mit Vakumentgasung das gefällte Pfropfmischpolymerisat B, das einen Restwassergehalt von z.B. 10 bis 40 Gew.% aufweisen kann, bei einer Temperatur über 180° C einbringt und intensiv vermischt. Man kann die Schmelze der beiden Hartkomponenten A und C auch direkt mit einer Dispersion des Pfropfmischpolymerisats, die einen Feststoffgehalt von 30 bis 60° C aufweist, bei einer Temperatur über 180° C intensiv vermischen.

Die erfindungsgemäße Formmasse kann nach den bekannten Verfahren der Thermoplastverarbeitung bearbeitet werden, also z.B. durch Extrudieren, Spritzgießen, Kalandrieren, Hohlkörperblasen, Pressen und Sintern; besonders bevorzugt werden aus den auch dem erfindungsgemäßen Verfahren hergestellten Formmassen Formteile durch Spritzgießen für den Automobilbau hergestellt.

Die zur Charakterisierung der beispielhaft beschriebenen Mischungen verwendeten Parameter können wie folgt bestimmt werden..

1. Die Viskositätszahl (VZ, $\eta_{spec}/c$) wird bei 25° C in einer 0,5 %igen Lösung in DMF gemessen, im Falle des Polycarbonsts in einer 0,5 %igen Lösung in Methylenchlorid.

2. Die Wärmeformbeständigkeit (nach VICAT, B/50) wird nach DIN 53 460 bestimmt.

3. Die Spannungsrißbeständigkeit gegenüber Benzin (Dieselkraftstoff wird an Biegestäben der Abmessung 2 x 15 x 80 mm) nach DIN 53 449 T3 bestimmt. Hierzu werden die Stäbe über Biegeschablonen über verschiedene Radien gespannt und bei 23° C im Prüfmedium 22 Stunden gelagert. Als Indikatoreigenschaft wird die Schlagzähigkeit $a_n$ nach DIN 53 453 genommen. Die Schlagzähigkeit wird dann in Abhängigkeit vom Biegeradius dargestellt. Anschließend wird der Biegeradius $d_{50}$, bei dem die Schlagzähigkeit auf 50 % des ursprünglichen Wertes abgefallen war, graphisch ermittelt. In den nachstehenden Beispielen wurden je 10 Biegestäbe pro Biegeradius geprüft.

4. Die Heißwasserbeständigkeit der Proben wird wie folgt bestimmt: Normkleinstäbe werden bei 95° in destilliertem Wasser gelagert. Nach verschiedenen Lagerzeiten werden je 5 Probekörper entnommen und die Schlagzähigkeit nach DIN 53 453 bestimmt.

## Komponente A

Aromatisches Polycarbonat auf Basis Bisphenol A, Handelsprodukt Lexan® der Firma General Electric mit einer Viskositätszahl VZ von 61,2 m/g.

## Komponente B1

Pfropfkautschuk mit einem Polybutadiengehalt von 58 Gew.% und einer Hülle aus Styrol-Acrylnitril im Verhältnis 60:30 mit einer mittleren Teilchengröße von 0,35 μm. Die Herstellung dieses ABS erfolgte gemäß DE-AS 24 27 960. Beispiel 1.

## Komponente B2

Ein ASA-Polymerisat aus 60 Gew.% eines vernetzten Acrylatkautschuks (98 Gew.% N-Butylacrylat und 2 Gew.% Dihydro-dicyclopentadienylacrylat) als Pfropfgrundlage und 40 Gew.% eines Gemisches aus Styrol und Acrylitril im Verhältnis 70:30 als Pfropfhülle mit einer mittleren Teilchengröße von 490 nm.

## Komponente C

Ein Styrol-Acrylnitril-Copolymerisat aus 75 Teilen Styrol und 25 Teilen Acrylnitril mit einer Viskositätszahl VZ von 70 ml/g.

## Komponenten $D_1$ bis $D_4$

## Herstellung von $D_1$

In einem 10 l Gefäß wurden 3 kg VE-Wasser, 60 g $C_{12}$-$C_{18}$-Paraffinsulfonsäure (Emulgator), 40 %ig in Wasser und 8 g Kaliumpersulfat vorgelegt und mit Stickstoff gespült. Es wurde auf 75° C geheizt und ein Gemisch aus 1,62 kg Methylmethacrylat, 180 g N-Benzylmethacrylamid und 7 g t-Dodecylmercaptan über

6

4 Stunden zudosiert und danach 2 Stunden polymerisiert.

Anschließend wurde das erhaltene Copolymerisat durch Gefrierkoagulation und Filtration isoliert und getrocknet. VZ (in DMF) = 48 ml/g.

Herstellung von D₂

Reaktionsführung wie bei der Herstellung von D₁: aus (Methylmethacrylat und N-Phenylmethacrylamid im Verhältnis 78:22 wird ein Copolymerisat mit VZ = 44 ml/g erhalten.

Herstellung von D₃

Ein Gemisch aus 92 Gew.-Teilen Methylmethacrylat und 8 Gew.-Teilen N-Cyclohexylmethacrylamid wurde mit 0,7 Gew.-Teilen t-Dodecylmercaptan (Regler) und mit 0,15 Gew.-Teilen Dilaurylperoxid (Initiator) versetzt und 15 Stunden bei 50°C, dann 5 Stunden bei 80°C anschließend 2 Stunden bei 110°C polymerisiert. Das resultierende Copolymerisat hat eine VZ von 52,3 ml/g.

Herstellung D₄ (Pfropfmischpolymerisat)

16 Gew.-Teile Butylacrylat und 0,4 Gew.-Teile Tricyclodecenylacrylat wurden in 150 Gew.-Teilen Wasser unter Zusatz von einem Gew.-Teil des Natriumsalzes einer C₁₂-C₁₄-Paraffinsulfonsäure, 0,3 Gew.-Teilen Kaliumperoxodisulfat, 0,3 Gew.-Teilen Natriumhydrogencarbonat und 0,15 Gew.-Teilen Natriumpyrophosphat unter Rühren auf 60°C erwärmt. 10 Minuten nach dem Anspringen der Polymerisationsreaktion wurden innerhalb von 3 Stunden eine Mischung aus 82 Gew.-Teilen Butylacrylat und 1,6 Gew.-Teilen Tricyclodecenylacrylat zugegeben und die Mischung noch 1 Stunde sich selbst überlassen. Der erhaltene Latex, ein vernetztes Butylacrylat-Polymerisat, hatte einen Feststoffgehalt von 40 Gew.%.

150 Gew.-Teile des so erhaltenen Latex wurden mit 40 Gew.-Teilen einer Mischung aus Methylmethacrylat und N-Phenylmethacrylamid (Gewichtsverhältnis 85:15) und 60 Gew.-Teilen Wasser gemischt und unter Rühren nach Zusatz von weiteren 0,03 Gew.-Teilen Kaliumperoxodisulfat und 0,05 Gew.-Teilen Lauroylperoxid 4 Stunden auf 65°C erhitzt. Nach Beendigung der Pfropfmischpolymerisation wurde das Polymerisationsprodukt mittels Calciumchloridlösung bei 95°C aus der Dispersion gefällt, mit Wasser gewaschen und im warmen Luftstrom getrocknet. Der Pfropfgrad des so erhaltenen Pfropfmischpolymerisats beträgt 35 die Teilchengröße 95 nm.

Komponente F

Polyethylen: Handelsprodukt Vestolan® A6016 der Chemische Werke Hüls AG

Komponente G

LLDPE der Firma DOW, mit 6 Octenanteil und einer Dichte von 0,924.

Die in der nachfolgenden Tabelle angegebenen Mengen der Komponenten sind Gewichtsteile; sie wurden mit jeweils 0,2 Gew.-Teilen eines sterisch gehinderten Phenols und 0,1 Gew.-Teilen Trisnonylphenylphosphat auf einem Fluidmischer gemischt und auf einem Doppelschneckenextruder, z.B. vom ZSK-Typ von Werner & Pfleiderer extrudiert. Aus dem getrockneten Granulat der Proben wurden die Formmassen für die Eigenschaftsprüfungen durch Spritzgießen hergestellt.

7

| Beispiele und Vergleichsbeispiele | | | | | | |
|---|---|---|---|---|---|---|
| Zusammensetzung | Wärmeformbeständigkeit VICAT B [$^\circ$C] | Spannungsrißbeständigkeit $d_{50}$ [mm] | Beständigkeit gegen heißes Wasser (95 $^\circ$C) $a_n$ [kJ/m$^2$] bei Lagerzeit von | | | |
| Beispiel | | | 50 | 60 | 70 | Tagen |
| 60 TI A + 20 TI $B_1$ + 10 TI C + 10 TI $D_1$ | 122 | 40 | k.Br.* | k.Br. | k.Br. | |
| 60 TI A + 20 TI $B_2$ + 10 TI C + 10 TI $D_2$ | 123 | 37 | k.Br. | k.Br. | k.Br. | |
| 60 TI A + 20 TI $B_2$ + 10 TI C + 10 TI $D_3$ | 121 | 34 | k.Br. | k.Br. | k.Br. | |
| 60 TI A + 10 TI $B_1$ + 10 TI C + 20 TI $D_4$ | 120 | 36 | k.Br. | k.Br. | 72 | |
| Vergleichsbeispiele | | | | | | |
| 60 TI A + 20 TI $B_1$ + 20 TI C | 121 | 95 | k.Br. | 70 | 45 | |
| 60 TI A + 20 TI $B_1$ + 15 TI C + 5 TI F | 117 | 55 | k.Br. | k.Br. | 65 | |
| 60 TI A + 20 TI $B_2$ + 10 TI C + 10 TI G | 114 | 43 | k.Br. | k.Br. | k.Br. | |

* kein Bruch

EP 0 363 797 A2

**Ansprüche**

1. Thermoplastische Formmasse, enthaltend, bezogen auf die Summe der Komponenten A und B und C und D,

A: 10 bis 80 Gew.% mindestens eines Polycarbonats A

B: 10 bis 50 Gew.% mindestens eines Pfropfmischpolymerisats B aus, jeweils bezogen auf B,

$b_1$ 20 bis 80 Gew.% mindestens eines Kautschuks $b_1$ mit einer Glastemperatur von unter 0°C und

$b_2$ 80 bis 20 Gew.% einer darauf gepfropften Hülle $b_2$ aus, jeweils bezogen auf $b_2$,

$b_{21}$ 60 bis 90 Gew.% mindestens eines vinylaromatischen Monomeren mit bis zu 12 C-Atomen oder Methylmethacrylat ($b_{21}$) und

$b_{22}$ 40 bis 10 Gew.% eines (Meth)acrylsäureesters oder (Meth)acrylnitril mit $C_1$-$C_8$-Alkylresten ($b_{22}$)

C: 5 bis 40 Gew.% eines thermoplastischen Harzes C aus, jeweils bezogen auf C,

$c_1$ 50 bis 90 Gew.% Styrol, $\alpha$-Methylstyrol und/oder eines kernsubstituierten Styrols ($c_1$) und

$c_2$ 10 bis 50 Gew.% (Meth)acrylnitril ($c_2$)

D: 5 bis 50 Gew.% eines Polymerisats D, hergestellt durch Polymerisation einer Mischung aus, jeweils bezogen auf die Summe der Komponenten $d_1$ und $d_2$,

70 bis 95 Gew.% Methylmethacrylat ($d_1$) und $d_1$)

5 bis 30 Gew.% eines Monomeren ($d_2$) der allgemeinen Formel I $d_2$)

$$CH_2 = \overset{\overset{\displaystyle R}{|}}{C} \text{-CO-NH-X} \qquad (I)$$

wobei R Wasserstoff oder Methyl ist und X ein Cyclohexyl-, Methylcyclohexyl-, Phenyl- oder Benzylrest ist, gegebenenfalls in Gegenwart von, bezogen auf die Summe der Komponenten $d_1$ und $d_2$ und $d_3$,

$d_3$ 0 bis zu 70 Gew.% eines Kautschuks ($d_3$) mit einer Glastemperatur von unter als 0°C.

2. Thermoplastische Formmasse nach Anspruch 1, enthaltend, bezogen auf die Summe aus A und B und C und D,

A: 30 bis 80 Gew.% Polycarbonat A

B: 10 bis 40 Gew.% Pfropfmischpolymerisat B aus, jeweils bezogen auf B,

$b_1$ 30 bis 70 Gew.% Kautschuk $b_1$ mit einer Glastemperatur von unter -20°C und

$b_2$ 70 bis 30 Gew.% einer Hülle $b_2$ aus, jeweils bezogen auf $b_2$,

$b_{21}$ 60 bis 90 Gew.% vinylaromatisches Monomer mit bis zu 12 C-Atomen oder Methylmethacrylat und

$b_{22}$ 40 bis 10 Gew.% (Meth)acrylsäureester oder (Meth)acrylnitril mit $C_1$-$C_8$-Alkylresten

C: 5 bis 30 Gew.% thermoplastisches Harz C aus, jeweils bezogen auf C,

$c_1$ 60 bis 90 Gew.% Styrol, $\alpha$-Methylstyrol und/oder einem kernsubstituierten Styrol und

$c_2$ 10 bis 40 Gew.% (Meth)acrylnitril

D: 5 bis 40 Gew.% eines Polymerisats hergestellt durch Polymerisation einer Mischung aus, jeweils bezogen auf die Summe aus $d_1$ und $d_2$

$d_1$ 70 bis 95 Gew.% Methylmethacrylat und

$d_2$ 5 bis 30 Gew.% des Monomeren der allgemeinen Formel I, gegebenenfalls in Gegenwart von, bezogen auf die Summe aus $d_1$ und $d_2$ und $d_3$,

$d_3$ 0 bis 70 Gew.% eines Kautschuks mit einer Glastemperatur von unter -20°C.

3. Thermoplastische Formmasse nach Anspruch 1 oder 2 enthaltend einen Kautschuk $b_1$ und/oder $d_3$ auf Polybutadienbasis oder Polyacrylatbasis.

4. Thermoplastische Formmasse nach Anspruch 1 oder 2 enthaltend einen ABS- oder ASA-Kautschuk B.

5. Thermoplastische Formmasse nach einem der Ansprüche 1 bis 4 enthaltend als Monomer $d_2$ N-Benzymethacrylamid.

6. Thermoplastische Formmasse nach einem der Ansprüche 1 bis 4 enthaltend als Monomer $d_2$ N-Phenylmethacrylamid.

7. Thermoplastische Formmasse nach einem der Ansprüche 1 bis 4 enthaltend als Monomer $d_2$ N-Cyclohexylmethacryl.

8. Thermoplastische Formmasse nach einem der Ansprüche 1 bis 7, enthaltend auf 100 Gew.-Teile A + B + C + D zusätzlich bis etwa 40 Gew.-Teile übliche Zusatzstoffe (Komponente E).

9. Verwendung einer Formmasse nach einem der Ansprüche 1 bis 7 zur Herstellung von Formteilen.